# EUROPEAN PATENT APPLICATION

(11) **EP 4 759 406 A2**
(43) Date of publication of application: **17.06.2026**
(21) Application number: 25217441.2
(22) Date of filing: 20.11.2025
(51) Int. Cl.: B01J 20/22, B01J 20/28, B01J 20/30, B01J 31/16, B01J 35/56, B01J 35/57, B01J 37/00, B01J 37/02, B33Y 10/00, B33Y 70/00

(54) **SYNTHESIS OF LARGE-SCALE MONOLITHIC STRUCTURES AND THIN-FILM STRUCTURES THAT FUNCTION AS SORBENTS OR CATALYSTS**

(30) Priority: 20.11.2024 US 202463722625 P
(71) Applicant: Services Pétroliers Schlumberger, 75007 Paris (FR); Schlumberger Technology B.V., 2514 JG The Hague (NL)
(72) Inventor: ARUNACHALAM, Karthikeyan, Cambridge, CB3 0EL (GB); RAMIER, Julien, Cambridge, CB3 0EL (GB); MEREDITH, Andrew, Cambridge, CB4 2DB (GB); GEDDES, Jill, Cambridge, CB3 0EL (GB); CAMPOS DE FARIA, Debora, Cambridge, CB3 0EL (GB)
(74) Representative: Schlumberger Intellectual Property Department

(57) **Abstract**

A method of synthesizing a monolithic structure is provided, which involves casting a gel of nanoparticle material using a mold body. The gel includes the nanoparticle material in reaction media. The mold body is dissolvable in media different from the reaction media at predefined process conditions. Other aspects are described and claimed.

## Description

### CROSS-REFERENCE TO RELATED APPLICAION(S)

The present disclosure claims priority from U.S. Prov. Appl. No. 63/722,625, filed on November 20, 2024, herein incorporated by reference in its entirety.

### FIELD

The present disclosure relates to synthesis of sorbents and catalysts used in chemical processes, and, in particular, to synthesis of such sorbents and catalysts using sol-gel processes.

### BACKGROUND

Sorbents and catalysts for chemical processes can be manufactured in pellet or particulate form by sol-gel processes. A sol-gel process is a method for producing solid materials from small molecules. In this chemical process, a "sol" (a colloidal solution) is formed that evolves towards the formation of a gel-like diphasic system containing both a liquid phase and solid phase. The sol is typically formed from a solution that includes precursor compounds dissolved in a solvent (such as water or organic solvent). The sol-gel process typically includes the following steps:
(1) hydrolysis of the precursor compounds and the start of the chemical reaction to form nanoparticles;
(2) nucleation and growth of the particles due to condensation;
(3) addition of a suitable substance as part of a reaction media which results in gelling; the morphology of the solid phase of the gel can range from discrete particles to continuous polymer networks; and
(4) a final step in which the material is aged, dried, and densified.

In the sol, the volume fraction of particles (or particle density) may be so low that a significant amount of fluid may need to be removed initially for the gel-like properties to be recognized. This can be accomplished in any number of ways. The simplest method is to allow time for sedimentation to occur and then pour off the remaining liquid. Centrifugation can also be used to accelerate the process of phase separation. Removal of the remaining liquid phase (typically a solvent) from the gel requires a drying process, which is typically accompanied by a significant amount of shrinkage and densification. The structure of the final product is influenced by changes imposed upon the structural template during the drying. Afterwards, a thermal treatment or firing process can be performed to further polycondensation and enhance mechanical properties and structural stability. One distinct advantage of the sol-gel process as opposed to the more traditional processing techniques is that densification is often achieved at a much lower temperature.

In the sol-gel process, the sol can be deposited on a substrate to form a film (e.g., by dip-coating or spin coating), cast into a suitable mold with the desired shape (e.g., to obtain monolithic structures), or used to synthesize powders (e.g., nanoparticles).

The synthesis of nanoparticles using the sol-gel process involves nucleation and growth. For example, in the synthesis of metal organic frameworks (MOFs), a metal ligand salt and an organic linker are used in a suitable reaction media which results in gelling. Once initial precursors are formed, the precursors form nanoparticles through a growth mechanism - Ostwald ripening, where the smaller nanoparticles coalesce together to form larger nanoparticles. Most of Ostwald ripening happens during the drying phase of the sol-gel process, which dries the MOF gel. Careful control of this drying stage is important to achieve high quality MOF nanoparticles. The MOF nanoparticle is a porous, crystalline material made from metal ions or polynuclear metallic complexes and organic molecules called ligands. These components are linked by strong coordination bonds, forming a three-dimensional network with high surface area. Typically, the MOF nanoparticles are synthesized as powders, which are then shaped into pellets using different shaping techniques such as palletization, granulation, etc.

However, the direct synthesis of MOF monoliths (i.e., a larger three-dimensional block of MOF) has also been proposed in literature. The MOF monolith is a three-dimensional block of porous, crystalline material made from metal ions or polynuclear metallic complexes and organic molecules called ligands. This process requires mild drying conditions that allow the coalescence of smaller nanoparticles into the MOF monolith (i.e., the larger three-dimensional block of MOF) during Ostwald ripening. However, this process can take an extremely long time and has poor control over the process parameters. This leads to cracking and deformation in the MOF monolith. Thus, the largest MOF monoliths that are manufactured using sol-gel processes are typically on the order of 1 cm in size.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

In accordance with the present disclosure, a method is provided for synthesizing a monolithic structure. The method involves casting a gel of nanoparticle material using a mold body. The gel includes the nanoparticle material in reaction media. The mold body is dissolvable in media different from the reaction media at predefined process conditions.

In embodiments, the predefined process conditions include high temperature conditions.

In embodiments, the nanoparticle material of the gel can include MOF material, COF material, zeolite material, or other nanoparticle material.

In embodiments, the casting can involve compressing the mold body simultaneously with drying material in the mold body.

In embodiments, the drying can employ a drying technique such as temperature drying, vacuum drying, freeze drying, or combinations thereof.

In embodiments, the drying can be controlled to facilitate Ostwald ripening within the mold body.

In embodiments, the compressing can be applied while evacuating the mold body during the drying in order to assist in suppressing the formation of cracks or fractures.

In embodiments, supercritical carbon dioxide can be used as the reaction media and part of the drying.

In embodiments, the compressing and the drying can be configured to form a precursor monolithic structure in the mold body. The mold body can be dissolved in the media different from the reaction media to form a resultant monolithic structure based on the precursor monolithic structure.

In embodiments, the mold body can include flow channel structures and/or microchannel structures that extend within the interior cavity of the mold body and that are dissolvable in the media different from the reaction media. The mold body including flow channel structures and/or microchannel structures can be dissolved in the media different from the reaction media to form a resultant monolithic structure based on the precursor monolithic structure, wherein the resultant monolithic structure includes flow channels and/or microchannels formed by dissolution of the flow channel structures and/or microchannel structures of the mold body.

In embodiments, the gel can include multiple different nanoparticle-based reaction mixtures. The multiple reaction mixtures can be separated in the mold body to cast a gradient of composition of different nanoparticle materials in the mold body.

Other features and aspects that synthesize monolithic three-dimensional structures and thin film structures are described and claimed.

### BRIEF DESCRIPTION OF THE DRAWINGS

The subject disclosure is further described in the detailed description which follows, in reference to the noted plurality of drawings by way of non-limiting examples of embodiments of the subject disclosure, in which like reference numerals represent similar parts throughout the several views of the drawings, and wherein:
Figure 1A is a schematic diagram illustrating an embodiment of a process that casts a nanoparticle gel in a mold in accordance with the present disclosure;
Figure 1B is a schematic diagram of a monolithic structure formed by the process of Figure 1A in accordance with the present disclosure; and
Figure 2 is a schematic diagram illustrating an embodiment of a process that forms a thin film structure on a substrate in accordance with the present disclosure.

### DETAILED DESCRIPTION

The particulars shown herein are by way of example and for purposes of illustrative discussion of the embodiments of the subject disclosure only and are presented in the cause of providing what is believed to be the most useful and readily understood description of the principles and conceptual aspects of the subject disclosure. In this regard, no attempt is made to show structural details in more detail than is necessary for the fundamental understanding of the subject disclosure, the description taken with the drawings making apparent to those skilled in the art how the several forms of the subject disclosure may be embodied in practice. Furthermore, like reference numbers and designations in the various drawings indicate like elements.

As used herein, a "monolithic structure" refers to a three-dimensional structure having a morphology formed from a particulate-based material.

As used herein, "nanoparticles" refer to particulate material with at least one dimension measuring between 1 and 100 nanometers.

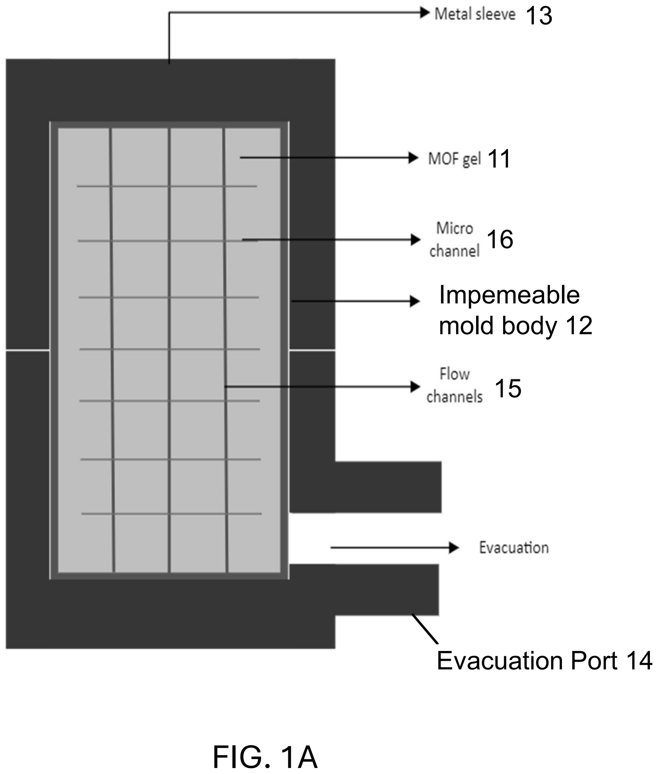

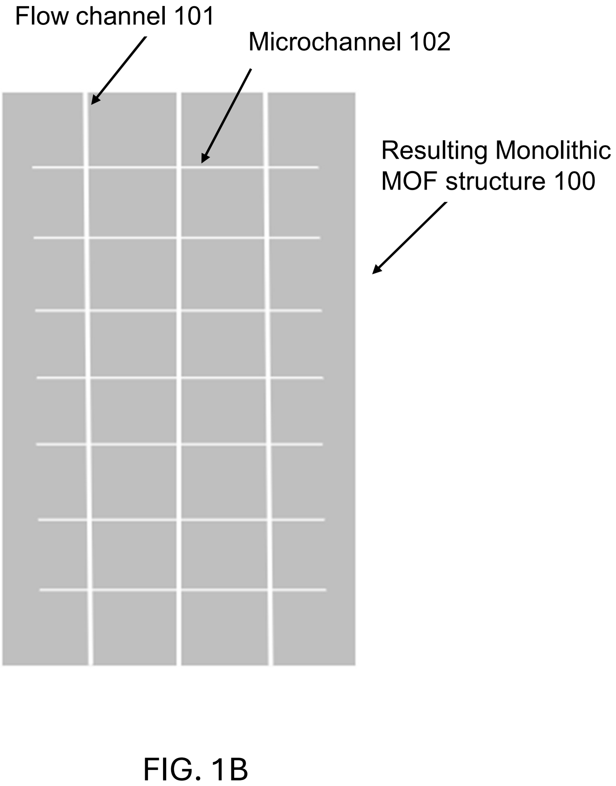

Figure 1A illustrates an embodiment of the present disclosure where a nanoparticle gel 11 is formed and the nanoparticle gel 11 is loaded into an interior cavity defined by an impermeable mold body 12. The nanoparticle gel 11 includes nanoparticles in a reaction media. The reaction media can be configured to support formation of the nanoparticle gel 11 (gelling) and support formation or growth of larger nanoparticles (for example, through Ostwald ripening) during drying. The mold body 12 is encapsulated by a metal sleeve 13 with an evacuation port 14. The mold body 12 includes dissolvable flow channel structures 15 and dissolvable microchannel structures 16 distributed within the interior cavity of the mold body 12. The flow channel structures 15 extend completely through the interior cavity of the mold body 12, while the microchannel structures 16 extend partially through the interior cavity of the mold body 12 and connect to adjacent flow channel structures 15. The mold body 12, including the flow channel structures 15 and microchannel structures 16, is formed from a material that is impermeable to the nanoparticle gel 11 but dissolvable in other solvents at different process conditions (such as high temperature). The mold body 12 and the sleeve 13 are configured to evacuate the gas phase within the interior cavity of the mold body 12 through the evacuation port 14 whilst compressing the nanoparticle gel 11 by closing the mold body 12 (which reduces the volume of the interior cavity of the mold body 12) and simultaneously drying the material, e.g., the nanoparticle gel 11, in the mold body 12. The drying can be controlled to facilitate formation or growth of larger nanoparticles (for example, through Ostwald ripening) within the mold body 12. This process densifies the material within the interior cavity of the mold body 12 while simultaneously drying and shaping the material in the same process. The drying and shaping results in a precursor monolithic structure formed within mold body 12. The external surfaces of the precursor monolithic structure can follow the contour of the inner surface of the interior cavity of the mold body 12 in its compressed state. After the drying and shaping is complete, the mold body 12 (including the flow channel structures 15 and microchannel structures 16) can be dissolved in an appropriate solvent to leave behind a resulting monolithic structure 100 as shown schematically in Figure 1B. The monolithic structure 100 has internal flow channels 101 and microchannels 102 formed in the monolithic structure by the dissolution of the corresponding flow channel structures 15 and microchannel structures 16 of the mold body 12. The flow channels 101 extend completely through the monolithic structure 100, while the microchannels 102 extend partially through the monolithic structure 100 and connect to adjacent flow channels 101. The external surfaces of the monolithic structure 100 can follow the contour of the inner surface of the interior cavity of the mold body 12 in its compressed state.

In embodiments, the nanoparticle gel 11 can include MOF nanoparticles within a gel-like diphasic system. In embodiments, the nanoparticle gel 11 can be formed as part of a sol-gel process.

In embodiments, the geometry and design of the mold body 12 (including the size and distribution of the flow channel structures 15 and microchannel structures 16) and the process parameters can be controlled to synthesize a monolith structure with carefully designed three-dimensional geometry and composition. This approach can synthesize monolith structures with novel large-scale three-dimensional geometry (at sizes much greater than 1 cm) together with flow channels and microchannels that offer superior mass transfer compared to packed beds. Furthermore, as the internal flow channels and microchannels of the monolith structure are formed by compression concurrent with formation or growth of larger nanoparticles (for example, through Ostwald ripening) carried out in the mold body followed by subsequent dissolution of the mold body features, damage to pores that occurs during conventional shaping processes, such as pelletization, are avoided. The resulting monolithic structure can function as a sorbent or catalyst for chemical processes.

In embodiments, the drying of the material in the mold body 12 can employ a drying technique such as temperature drying, vacuum drying, freeze drying, or combinations thereof.

In other embodiments, multiple different nanoparticle-based gels (reaction mixtures) can be loaded into the interior cavity of the mold body 12 and processed within the mold body 12 to simultaneously dry and shape the different materials within the interior cavity of the mold body 12. The multiple reaction mixtures can be separated in the mold body 12 such that the drying and shaping process within the mold body 12 results in a precursor monolithic structure with a gradient of composition of the different materials within the precursor monolithic structure. After the drying and shaping is complete, the mold body 12 (including the flow channel structures 15 and microchannel structures 16) can be dissolved in an appropriate solvent to leave behind a resulting monolithic structure with internal flow channels and microchannels formed in the monolithic structure by the dissolution of the flow channel structures and/or microchannel structures of the mold body similar to Figure 1B. The resulting monolithic structure can have a gradient of composition of the different materials within the monolithic structure. The separation and gradient of the composition of the different materials in the process can be controlled through gravity, electromagnetic force, or other suitable methods. The resulting monolithic structure with a gradient of composition of the different materials within the monolithic structure can function as a sorbent or catalyst in a chemical process, such as in process intensification applications.

In embodiments, the multiple different nanoparticle-based gels loaded into the interior cavity of the mold body 12 and processed within the mold body 12 can include different MOF nanoparticles within gel-like diphasic systems. In embodiments, the multiple different nanoparticle-based gels can be formed as part of different sol-gel processes.

In other embodiments, the nanoparticle gel (or the multiple different nanoparticle-based gels) loaded into and processed within the mold body of Figure 1A can be formed from a covalent-organic framework (COF), zeolite, or other nanoparticle material. A covalent-organic framework is a porous polymer that forms a three-dimensional structure through reactions between organic precursors resulting in strong, covalent bonds. Zeolite is a natural or synthetic hydrated aluminosilicate mineral characterized by a porous, honeycomb-like structure that contains a framework of aluminum, silicon, and oxygen atoms. After the drying and shaping is complete, the mold body (including the flow channel structures 15 and microchannel structures 16) can be dissolved in an appropriate solvent to leave behind a resulting monolithic structure similar to that shown schematically in Figure 1B. The monolithic structure has internal flow channels and microchannels formed in the monolithic structure by the dissolution of the corresponding flow channel structures and microchannel structures of the mold body. The flow channels extend completely through the monolithic structure, while the microchannels extend partially through the monolithic structure and connect to adjacent flow channels. The external surfaces of the monolithic structure can follow the contour of the inner surface of the interior cavity of the mold body in its compressed state. The material in the monolithic structure can be formed from a single gel material or have a gradient of compositions formed from different gel materials. The monolithic structure can function as a sorbent or catalyst for chemical processes.

In embodiments, the mold body can be formed by 3D printing or other suitable techniques. The flow channel structures and microchannel structures can be formed together with the mold body or formed separately and added to the mold body. The mold body can include one or more additives that assist in heat dissipation during the molding/casting process.

In embodiments, supercritical carbon dioxide can be used as both the reaction media for the nanoparticle gel (or for the multiple different nanoparticle gels) and part of the drying of the material in the mold body during the casting/molding process.

In other embodiments, a monolithic MOF structure having a three-dimensional geometry at sizes much greater than 1 cm can be manufactured using 3D printing or spraying. 3D printing is a process that creates three-dimensional objects by layering material (in this case MOF material) from a digital model, rather than removing it. Spraying is a process that atomizes a reactant solution (in this case, the reactant solution contains MOF material) and sprays the reactant solution onto a substrate or another reactant solution. With these techniques, the monolithic MOF structures can be formed with composition gradients (anisotropy) of MOF material within the monolithic MOF structure. The resulting monolithic MOF structure can function as a sorbent or catalyst for chemical processes.

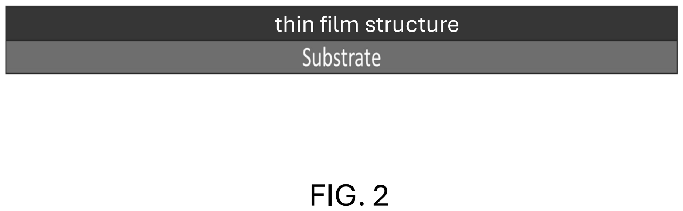

In still other embodiments, a two-dimensional thin film (thin film structure) of high crystalline MOFs, covalent-organic frameworks (COFs), zeolites, or other nanoparticle materials can be obtained by a quick drying process during a deposition (and growth) process of the thin film structure on a substrate as shown in Figure 2. Using controlled processing parameters (e.g., temperature, pressure, time) of the drying process during the deposition (and growth) process, the growth and merger of particles can be controlled to form a highly crystalline thin film on the substrate with very low internal stress. The resulting thin film structure can function as a sorbent or catalyst for chemical processes. The thin film structure can be a layer of material with relatively low thickness (which can range from nanometers to micrometers) that is deposited onto a substrate.

In embodiments, the drying process of Figure 2 can involve blown dry air, blown hot air, vacuum processing, another suitable drying technique, or combinations thereof. The temperature and the conditions could be adjusted to reduce the drying time and/or favor the required growth and nucleation.

The material of the thin film structure (e.g., MOF, COF, zeolite, or other nanoparticle material) can be applied to the substrate by continuous spray deposition, vapor deposition, spin coating, dip coating, or other suitable process.

Advantageously, the present disclosure describes novel processing techniques for the synthesis of monolithic structures or thin films that include one or more MOFs, one or more COFs, one or more zeolites, other nanoparticles, or combinations thereof. The monolithic structures or thin films can function as a sorbent or catalyst in a chemical process. While particular embodiments have been described, it is not intended that the invention be limited thereto, as it is intended that the invention be as broad in scope as the art will allow and that the specification be read likewise.

## Claims

1. A method of synthesizing a monolithic structure, the method comprising:
forming or obtaining a gel of nanoparticle material in reaction media; and
casting the gel of nanoparticle material using a mold body, wherein the mold body is dissolvable in media different from the reaction media at predefined process conditions.

2. The method of claim 1, wherein:
the predefined process conditions include high temperature conditions; and/or
the gel is formed by a sol-gel process.

3. The method of claim 1 or 2, wherein:
the nanoparticle material of the gel comprises at least one of: MOF material, COF material, zeolite material, other nanoparticle material, or combinations thereof; and/or
the nanoparticle material of the gel comprises multiple different nanoparticle materials; and/or
the nanoparticle material of the gel comprises multiple different nanoparticle materials selected from the group consisting of: MOF material, COF material, zeolite material, other nanoparticle material, or combinations thereof; and/or
the nanoparticle material of the gel comprises multiple different nanoparticle materials configured as a gradient of compositions of different nanoparticle materials in the mold body; and/or
the casting involves compressing the mold body simultaneously with drying material in the mold body.

4. The method of claim 3, wherein:
the drying employs a drying technique selected from temperature drying, vacuum drying, freeze drying, or combinations thereof; and/or
the drying is controlled to facilitate Ostwald ripening within the mold body; and/or
the compressing is applied while evacuating the mold body during the drying in order to assist in suppressing the formation of cracks or fractures; and/or
the compressing employs a metal sleeve configured to encapsulate the mold body; and/or
supercritical carbon dioxide is used as the reaction media and part of the drying; and/or
the compressing and the drying forms a precursor monolithic structure in the mold body.

5. The method of claim 4, further comprising:
dissolving the mold body in the media different from the reaction media to form a resultant monolithic structure based on the precursor monolithic structure; and/or
dissolving the mold body including flow channel structures and/or microchannel structures that extend within the interior cavity of the mold body in media different from the reaction media to form a resultant monolithic structure based on the precursor monolithic structure, wherein the resultant monolithic structure includes flow channels and/or microchannels formed by dissolution of the flow channel structures and/or microchannel structures of the mold body.

6. The method of any one of the preceding claims, wherein:
the mold body comprises at least one additive that assists in heat dissipation; and/or
the monolithic structure functions as a sorbent or catalyst in a chemical process.

7. A method of synthesizing a monolithic structure, the method comprising:
employing a 3D printing technique to build a monolithic structure formed from nanoparticle material.

8. The method of claim 7, wherein:
the nanoparticle material comprises at least one of: MOF material, COF material, zeolite material, other nanoparticle material, or combinations thereof; and/or
the nanoparticle material comprises multiple different nanoparticle materials; and/or
the nanoparticle material comprises multiple different nanoparticle materials selected from the group consisting of: MOF material, COF material, zeolite material, other nanoparticle material, or combinations thereof; and/or
the nanoparticle material comprises multiple different nanoparticle materials configured as a gradient of compositions of different nanoparticle materials.

9. The method of claim 7 or 8, wherein:
the monolithic structure has a size greater than 1 cm; and/or
the monolithic structure functions as a sorbent or catalyst in a chemical process.

10. A method of synthesizing a monolithic structure, the method comprising:
employing spraying to build a monolithic structure formed from nanoparticle material.

11. The method of claim 10, wherein:
the nanoparticle material comprises at least one of: MOF material, COF material, zeolite material, other nanoparticle material, or combinations thereof; and/or
the nanoparticle material comprises multiple different nanoparticle materials; and/or
the nanoparticle material comprises multiple different nanoparticle materials selected from the group consisting of: MOF material, COF material, zeolite material, other nanoparticle material, or combinations thereof; and/or
the nanoparticle material comprises multiple different nanoparticle materials configured as a gradient of compositions of different nanoparticle materials.

12. The method of claim 10 or 11, wherein:
the monolithic structure has a size greater than 1 cm; and/or
the monolithic structure functions as a sorbent or catalyst in a chemical process.

13. A method of synthesizing a thin film structure, the method comprising:
employing at least one drying process to grow a thin film structure formed from nanoparticle material on a substrate.

14. The method of claim 13, wherein:
the at least one drying process employs at least one of: air, hot air, vacuum, another suitable drying technique, or combinations thereof.

15. The method of claim 13 or 14, wherein:
the nanoparticle material is selected from the group consisting of: MOF material, COF material, zeolite material, other nanoparticle material, or combinations thereof; and/or
the thin film structure functions as a sorbent or catalyst in a chemical process.
